# EUROPEAN PATENT SPECIFICATION

(11) **EP 1 277 765 B1**
(45) Date of publication and mention of the grant of the patent: **24.11.2004**
(21) Application number: 01113603.3
(22) Date of filing: 15.06.2001
(51) Int. Cl.: C08F 2/02, C08F 14/06, B01J 19/18

(54) **Process for making skinless PVC**
Verfahren zur Herstellung von hautfreiem PVC
Procédé de fabrication de PVC sans peau

(43) Date of publication of application: 22.01.2003
(73) Proprietor: Saudi Basic Industries Corporation, Riyadh 11422 (SA)
(72) Inventor: Healy, Bruce A., 11551 Riyadh (SA); Zerfa, Mohammed, 11551 Riyadh (SA); Al-Khodairi, Fahad, 11551 Riyadh (SA)
(74) Representative: Goddar, Heinz J., Dr.

(56) References cited:
- EP-A- 0 501 300
- US-A- 3 687 923
- US-A- 4 775 702
- US-A- 5 043 404

## Description

The present invention relates to a process for preparation of polyvinyl chloride (PVC), especially to a process for preparation of skinless polyvinyl chloride.

Various processes for the preparation of polyvinyl chloride are known in the art.

US 3,522,227 discloses a process for mass polymerization of vinyl chloride monomer for increasing the density of the grains produced wherein the polymerization is carried out in a plurality of stages under similar conditions of pressure, temperature, and catalysis, comprising a prior stage proceeding to about 7-12 percent completion of polymerization accompanied by agitation of high turbulence, and a final stage proceeding in the absence of high turbulence to a selected end point of polymerization with relatively mild agitation peripherally applied to the polymer-containing mass. Polymerization is done with no water present.

US 3,687,919 discloses a process for polymerizing ethylenic monomers capable of polymerization in mass to form spherical particles with controlled size distribution wherein the polymerization mixture is agitated in a first reaction step with a high stirring speed and is than transferred to a second reactor provided with milder agitation. Polymerization is done with no water present.

However, the mass polymerization processes of US 3,522,227 and US 3,687,919 are low productivity processes and are therefore less economical than standard polymerization processes of vinyl chloride monomer which are based on a suspension technology.

US 3,706,722 discloses a process of polymerizing substantially water-insoluble polymerizable ethylenically unsaturated liquid monomer firstly as an initial continuous phase consisting of monomer in the presence of a catalyst which is soluble in said monomer. The monomer is polymerized under agitation to provide a conversion of monomer to polymer up to about 5-20 percent followed by addition of sufficient water to the monomer-polymer-mixture with agitation and in the presence of a water-soluble suspending agent to invert the reaction wherein water becomes the continuous phase. The mixture is then polymerized to the desired conversion. The polymerization according to US 3,706,722 may be carried out in the presence of a surface active agent which is solubilized in said monomer and is carried out in only one reactor wherein the stirring speed of the agitator in that reactor is not changed. As is known by persons skilled in the art, the process of US 3,706,722 is a low productivity process and reactor fouling significantly occurs during the polymerization. Therefore, the process of US 3,706,722 is less economical than a process for the preparation of polyvinyl chloride based on a standard suspension technology.

US 4,775,702 discloses an aqueous phase inversion process for producing skinless and crosslinked PVC resins comprising polymerizing vinyl chloride monomer together with at least one cross-linking agent wherein the process is first conducted with the monomer phase as the continuous phase and after from about 1 percent to about 10 percent conversion of monomer to polymer water is added to invert the process such that the aqueous phase is the continuous phase and the monomer phase is a discontinuous phase.

It is therefore an object of the present invention to provide a process for preparation of polyvinyl chloride which overcomes the drawbacks of the prior art, especially providing a process which produces skinless polyvinyl chloride with high productivity in an economical manner.

The object of the present invention is solved by a process for preparation of polyvinyl chloride (PVC) comprising the steps of:
- mass polymerizing vinyl chloride monomer in the presence of at least one oil soluble emulsifier and at least one initiator in a first reactor having high shear agitation with a fast stirring speed in a range of 100-1500 rpm until a desired conversion in the range of 1-15 percent is reached;
- transferring the content of the first reactor into at least one second reactor which has been charged with demineralized water and at least one water soluble emulsifier; and
- polymerizing the mixture in the second reactor having agitation with lower shear than the agitation in the first reactor until a desired conversion in the range of 60-100 percent is reached.

According to the present invention, the stirring speed in the first reactor is preferably in the range of 750-1200 rpm, and the stirring speed in the second reactor is in the range of about 75-500 rpm, preferably 95-350 rpm, and the second reactor is about 2-2,5 times bigger than the first reactor.

Preferably, the temperature in the first reactor is in the range of 55-75°C, more preferaby 65°C, and the temperature in the second reactor is in the range of about 45-75°C, more preferably 50-70°C.

According to the present invention, a process is provided wherein the conversion in the first reactor is in the range of about 1-15 percent, preferably 7-10 percent, and the conversion in the second reactor is in the range of about 60-100 percent, preferably 75-85 percent.

Further, the volume of the first reactor may be in the range of 11 to 75 m³, preferably in the range of 25 to 75 m³, and the volume of the second reactor may be in the range of about 81 to 150 m³, preferably in the range of 50-150 m³.

Preferably, one first reactor may be used for up to five second reactors, and the first reactor may be positioned above the second reactor and may be connected by solid pipe or blowdown line to the second reactors.

The oil soluble emulsifier may be sorbitan monolaurate, sorbitan palmitate, sorbitan tristearate, sorbitan trioleate, preferably sorbitan palmitate or various sucrose ester mixtures of sucrose distearate, mono stearate, tristearate, dipalmitate, tetrastearate, pentastearate, hexastearate, heptastearate, or octastearate, preferrably mixtures of hexastearate, pentastearate and heptastearate with a hydrophilic/lipophylic balance value between 1-15 preferably 1-10. The oil soluble emulsifier be employed in an amount of 100 - 10,000 parts per million by weight, based on the weight of the vinyl chloride monomer. The oil soluble emulsifier may be further selected from sucrose esters.

The initiator may be selected from the group comprising di-2-ethylhexyl peroxydicarbonate, 1,1,3,3-tetramethylbutly peroxyneodecanoate, tert-butyl peroxyneoheptanoate, tert-butyl peroxyneodecanoate, wherein di-2-ethylhexyl peroxydicarbonate is preferred.

The initiator is employed in an amount of 100 - 1000 parts per million by weight, based on the weight of the vinyl chloride monomer.

The water-soluble emulsifier may be selected from the group comprising alkyl or hydroxy alkyl cellulose ethers, methyl cellulose and methyl hydroxy propyl cellulose, wherein methyl hydroxy propyl cellulose is preferred. It is to be understood that the latter emulsifier groups are merely intended as an illustration and not in a limitative sense.

The water-soluble emulsifiers may be employed in an amount of 500 - 5000 parts per million by weight, based on the weight of the vinyl chloride monomer.

According to the present invention, the weight ratio of water to monomer in the second reactor is in the range of 1,0-1,5 to 1.

Optionally, the second reactor may be additionally charged with vinyl chloride monomer and/or its comonomers.

It is obvious that besides vinyl chloride at least one comonomer may be present in the first and/or second reactor. The comonomers copolymerizable with vinyl chloride, as referred to in this invention, encompass all comonomers which are known to be copolymerizable with vinyl chloride, such as vinyl bromide, vinylidene chloride and the like.

Surprisingly, it was found that using the process according to the present invention polyvinyl chloride may be produced which is skinless and has good quality and which may be produced with high productivity. This is due to the specific variation of the suspension technology for preparing polyvinyl chloride, namely a mass pre-polymerization in a reactor with high shear agitation followed by a suspension polymerization in a second larger reactor with lower shear agitation than in the first reactor. Following the procedure of the present invention reactor fouling may be prevented. The process of the present invention is a process resulting in a clean reactor.

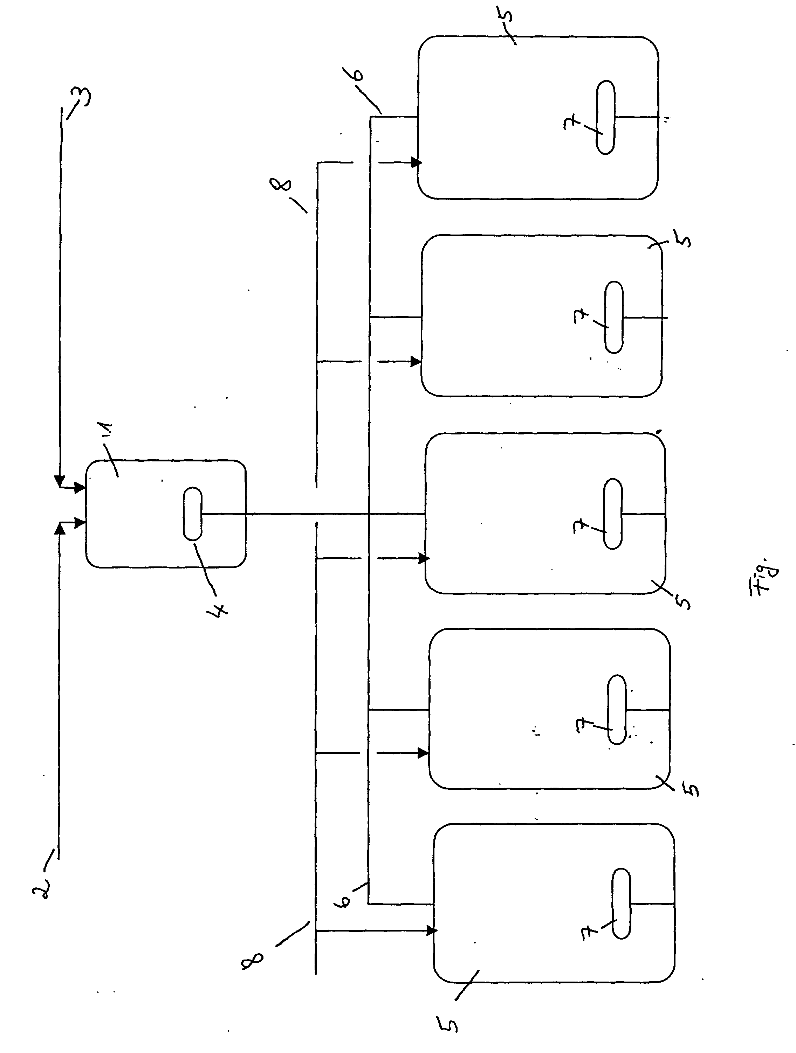

Further advantages and features of the present invention will be explained in the following in more detail under consideration of the drawing which consists of only one figure which shows a diagrammatic view of the reactor system of the present invention.

According to the figure a first reactor 1 is provided with a supply line 2 for an oil soluble emulsifier and an initiator, and with a second supply line 3 for supplying vinyl chloride monomer. The first reactor 1 has, for example, a volume of 25 to 75 m³. Within the reactor 1 an agitator 4 is located. According to the figure, the reactor 1 is connected to five second reactors 5 by line 6. The line 6 may be a solid pipe or a blowdown line. Preferably, the second reactors 5 are located below the first reactor 1 and have a volume of about 50 to 150 m³. Within the second reactors 5 there is each provided an agitator 7. Further, each reactor 5 is provided with a supply line 8 for supplying the reactor 5 with demineralized water and water-soluble emulsifier. Optionally, a further supply line (not shown) may be provided for the second reactor 5 for providing further vinyl chloride monomer or comonomer to that reactor 5.

The process according to the present invention is carried out as follows:

To the reactor 1 a recipe quantity of the oil soluble emulsifier is added. Then the reactor 1 is closed and full vacuum is drawn, the reactor 1 is then purged which nitrogen, and full vacuum is drawn again. After that the reactor 1 is purged with vinyl chloride monomer and is vented to atmospheric pressure. The vinyl chloride monomer is then added to the reactor 1. Afterwards, the agitator 4 is started to a stirring speed of about 750 to 1200 rpm and the reactor 1 is heated to the desired temperature which is in the range of about 60 to 70°C.

At the same time, a second reactor 5 is charged with the recipe quantity of water and of the water-soluble emulsifier. The reactor 5 is closed and full vacuum is drawn, whereupon the reactor 5 is purged with nitrogen and full vacuum is drawn again. After that, the reactor 5 is purged again with vinyl chloride monomer, and is vented to atmospheric pressure. Optionally further vinyl chloride monomer may be added to the reactor 5. Finally, the agitator 7 is started having a stirring speed in the range of 95 to 350 rpm, and the reactor 5 is heated to the desired temperature in the range of 50 to 70°C.

As soon as both reactors 1 and 5 have reached their desired temperatures, the initiator is injected into the first reactor 1 and the polymerization in reactor 1 is carried out until the desired conversion is reached. After that, the content of the first reactor 1 is transferred into the second reactor 5 and the valves (not shown) between the two reactors 1, 5 are closed and the reactor 1 is vented. The first reactor 1 is purged with nitrogen and may then be opened for inspection and cleaning. The polymerization now proceeds in the second reactor 5, and when the pressure in the reactor 5 drops to a specified amount, a shortstop for stopping the polymerization is injected. Unreacted monomer is then vented from the reactor 5 and the content of the reactor 5 is stripped at 90°C for 10 minutes. Finally the reactor 5 is cooled down and its content may be discharged.

In the following the process of the present invention is further illustrated by way of examples.

### Example 1

To a 4,35 liter reactor the following ingredients are added:
3,38 kg vinyl chloride monomer, 10,14 grams of Span 80 oil soluble emulsifier. The agitator is started at 1200 rpm and the mixture is heated to 65°C. Then 6,76 grams of di-2-ethylhexyl peroxydicarbonate are injected.

After a 20 minutes reaction time, the contents of the reactor are dropped to a 10,2 liter reactor that has been pre-charged with 5,07 kg of demineralized water and 105,6 grams of hydroxypropyl methyl cellulose. The pre-charged materials have been heated to 58,5°C with an stirring speed of 350 rpm. This reaction mixture is allowed to react for a total reaction time of 315 minutes. The unreacted vinyl chloride monomer in the reactor is then vented, and the remaining material is dewatered and dried. The polyvinyl chloride obtained in Example 1 has the characteristics as outlined in Table 1 below.

**Table 1**

| Example Number | Average Particle Size Microns | Particle Size Dist. | Apparent Bulk Density gm/cc | Flow Time Seconds | DOP Porosity cc/gm | Heat Loss Percentage |
|---|---|---|---|---|---|---|
| 1 | 211,5 | 36,835 | 0,451 | 21,71 | 0,349 | 0,2 |

### Example 2

To a 4,35 liter reactor the following ingredients are added:
3,38 kg vinyl chloride monomer, 16,90 grams of Span 40 oil soluble emulsifier. The agitator is started at 1200 rpm and the mixture is heated to 65°C. Then 4,23 grams of di-2-ethylhexyl peroxydicarbonate are injected.

After a 17 minute reaction time, the contents of the reactor are dropped to a 10,2 liter reactor that has been pre-charged with 5,07 kg of demineralized water and 140,83 grams of hydroxypropyl methyl cellulose. The pre-charged materials have been heated to 58,5°C with a stirring speed of 300 rpm. This reaction mixture is allowed to react for a total reaction time of 380 minutes. The unreacted vinyl chloride monomer in the reactor is then vented, and the remaining material is dewatered and dried.

The polyvinyl chloride obtained in Example 2 has the characteristics as outlined in Table 2 below.

**Table 1**

| Example Number | Average Particle Size Microns | Particle Size Dist. | Apparent Bulk Density gm/cc | Flow Time Seconds | DOP Porosity cc/gm | Heat Loss Percentage |
|---|---|---|---|---|---|---|
| 2 | 301 | 24,45 | 0,465 | 20,49 | 0,409 | 0,105 |

### Example 3

To a 4,35 liter reactor the following ingredients are added:
3,38 kg vinyl chloride monomer, 13,52 grams of Span 40 oil soluble emulsifier. The agitator is started at 1200 rpm and the mixture is heated to 65°C. Then 5,07 grams of di-2-ethylhexyl peroxydicarbonate are injected.

After a 20 minute reaction time, the contents of the reactor are dropped to a 10,2 liter reactor that has been pre-charged with 5,07 kg of demineralized water and 140,83 grams of hydroxypropyl methyl cellulose. The pre-charged materials have been heated to 58.5°C with an stirring speed of 300 rpm. This reaction mixture is allowed to react for a total reaction time of 420 minutes. The unreacted vinyl chloride monomer in the reactor is then vented, and the remaining material is dewatered and dried.

The polyvinyl chloride obtained in Example 3 has the characteristics as outlined in Table 3 below.

**Table 3**

| Example Number | Average Particle Size Microns | Particle Size Dist. | Apparent Bulk Density gm/cc | Flow Time Seconds | DOP Porosity cc/gm | Heat Loss Percentage |
|---|---|---|---|---|---|---|
| 3 | 264,5 | 56,27 | 0,494 | 22,38 | 0,337 | 0,205 |

### Example 4

To a 4,35 liter reactor the following ingredients are added:
2,55 kg vinyl chloride monomer, 9,87 grams of S-170 sucrose ester oil soluble emulsifier. The agitator is started at 900 rpm and the mixture is heated to 65°C. Then 3,18 grams of di-2-ethylhexyl peroxydicarbonate are injected.

After a 45 minute reaction time, the contents of the reactor are dropped to a 10,2 liter reactor that has been pre-charged with 4.95 kg of demineralized water and 274.55 grams of hydroxypropyl methyl cellulose. The pre-charged materials have been heated to 58.5°C with a stirring speed of 300 rpm. This reaction mixture is allowed to react for a total reaction time of 330 minutes. The unreacted vinyl chloride monomer in the reactor is then vented, and the remaining material is dewatered and dried.

The polyvinyl chloride obtained in Example 4 has the characteristics as outlined in Table 4 below.

**Table 4**

| Example Number | Average Particle Size Microns | Particle Size Dist. | Apparent Bulk Density gm/cc | Flow Time Seconds | DOP Porosity cc/gm | Heat Loss Percentage |
|---|---|---|---|---|---|---|
| 4 | 237 | 70.145 | 0.545 | 22.475 | 0.249 | 0.2 |

The features disclosed in the foregoing description, in the claims and/or in the accompanying drawing may, both separately and in any combination thereof be material for realizing the invention in diverse forms thereof.

## Claims

1. Process for preparation of polyvinyl chloride (PVC) comprising the steps of:
- mass polymerizing vinyl chloride monomer in the presence of at least one oil soluble emulsifier and at least one initiator in a first reactor having an agitator stirring with high shear in a range of 100-1500 rpm until a desired conversion in the range of 1-15 percent is reached;
- transferring the content of the first reactor into at least one second reactor which has been charged with demineralized water and at least one water soluble emulsifier; and
- polymerizing the mixture in the second reactor having an agitator stirring with shear lower than in the first reactor until a desired conversion in the range of 60-100 percent is reached.

2. Process according to claim 1, wherein the stirring speed in the first reactor is in the range of 750-1200 rpm, and the stirring speed in the second reactor is in the range of about 75-500 rpm, preferably 95-350 rpm.

3. Process according to claim 1 or 2, wherein the second reactor is 2-2,5 times bigger than the first reactor.

4. Process according to any of the preceding claims, wherein the temperature in the first reactor is in the range of 55-75°C, preferably 65°C, and the temperature in the second reactor is in the range of 45-75°C, preferably 50-70°C.

5. Process according to any of the preceding claims, wherein the conversion in the first reactor is in the range of 7-10percent, and the conversion in the second reactor is in the range of 75-85 percent.

6. Process according to any of the preceding claims, wherein the volume of the first reactor is in the range of 1 liter to 75 m³, preferably in the range of 25 to 75 m³, and the volume of the second reactor is in the range of 8 liters to 150 m³, preferably in the range of 50-150 m³.

7. Process according to any of the preceding claims, wherein one first reactor is used with up to five second reactors.

8. Process according to any of the preceding claims, wherein the first reactor is positioned above the second reactor and is connected by solid pipe or blowdown line to the second reactor.

9. Process according to any of the preceding claims, wherein the oil soluble emulsifier is selected from sorbitan or sucrose esters or mixtures thereof.

10. Process according to claim 9, wherein the oil soluble emulsifier is employed in an amount of 100 to 10,000 parts per million by weight, based on the weight of the vinyl chloride monomer.

11. Process according to any of the preceding claims, wherein the initiator is selected from the group comprising di-2-ethylhexyl peroxydicarbonate, 1,1,3,3-tetramethylbutly peroxyneodecanoate, tert-butyl peroxyneoheptanoate, tert-butyl peroxyneodecanoate, wherein di-2-ethylhexyl peroxydicarbonate is preferred.

12. Process according to claim 11, wherein the initiator is employed in an amount of about 100 - 1000 parts per million by weight, based on the weight of the vinyl chloride monomer.

13. Process according to any of the preceding claims, wherein the water-soluble emulsifier is selected from the group comprising alkyl or hydroxy alkyl cellulose ethers, methyl cellulose and methyl hydroxy propyl cellulose, methyl hydroxy propyl cellulose being preferred.

14. Process according to claim 13, wherein the water soluble emulsifier is employed in an amount of 500-5000 parts per million by weight, based on the weight of the vinyl chloride monomer.

15. Process according to any of the preceding claims, wherein the weight ratio of water to monomer in the second reactor is in the range of 1,0-1,5 to 1.

16. Process according to any of the preceding claims, wherein the second reactor is additionally charged with vinyl chloride monomer.

## Patentansprüche

1. Verfahren zur Herstellung von Polyvinylchlorid (PVC), welches die Schritte umfaßt:
- Massepolymerisation von Vinylchloridmonomer in der Gegenwart von wenigstens einem öllöslichen Emulgator und wenigstens einem Initiator in einem ersten Reaktor mit einem Rührer, der mit einer hohen Scherung in einem Bereich von 100 - 1500 rpm rührt, bis ein gewünschter Umsatz in dem Bereich von 1 - 15% erreicht wird;
- Überführen des Inhalts des ersten Reaktors in wenigstens einen zweiten Reaktor, welcher mit entmineralisiertem Wasser und wenigstens einem wasserlöslichen Emulgator befüllt worden ist; und
- Polymerisieren der Mischung in dem zweiten Reaktor mit einem Rührer, der mit einer Scherung rührt, die kleiner ist als in dem ersten Reaktor, bis ein gewünschter Umsatz in dem Bereich von 60 - 100% erreicht wird.

2. Verfahren nach Anspruch 1, **dadurch gekennzeichnet, daß** die Rührgeschwindigkeit in dem ersten Reaktor in dem Bereich von 750 - 1200 rpm ist und die Rührgeschwindigkeit in dem zweiten Reaktor in dem Bereich von etwa 75 - 500 rpm, bevorzugt 95 - 350 rpm ist.

3. Verfahren nach Anspruch 1 oder 2, **dadurch gekennzeichnet, daß** der zweite Reaktor 2-2,5-mal größer als der erste Reaktor ist.

4. Verfahren nach einem der vorangehenden Ansprüche, **dadurch gekennzeichnet, daß** die Temperatur in dem ersten Reaktor in dem Bereich von 55 - 75°C, bevorzugt 65°C, ist und die Temperatur in dem zweiten Reaktor in dem Bereich von 45 - 75°C, bevorzugt 50 - 70°C, ist.

5. Verfahren nach einem der vorangehenden Ansprüche, **dadurch gekennzeichnet, daß** der Umsatz in dem ersten Reaktor in dem Bereich von 7 - 10% ist und der Umsatz in dem zweiten Reaktor in dem Bereich von 75 - 85% ist.

6. Verfahren nach einem der vorangehenden Ansprüche, **dadurch gekennzeichnet, daß** das Volumen des ersten Reaktors in dem Bereich von 1 Liter bis 75m³, bevorzugt in dem Bereich von 25 bis 75m³, ist und das Volumen des zweiten Reaktors in dem Bereich von 8 Litern bis 150m³, bevorzugt in dem Bereich von 50 - 150m³, ist.

7. Verfahren nach einem der vorangehenden Ansprüche, **dadurch gekennzeichnet, daß** ein erster Reaktor mit bis zu fünf zweiten Reaktoren verwendet wird.

8. Verfahren nach einem der vorangehenden Ansprüche, **dadurch gekennzeichnet, daß** der erste Reaktor oberhalb des zweiten Reaktors angeordnet ist und durch ein Feststoffrohr oder eine Ausblasleitung mit dem zweiten Reaktor verbunden ist.

9. Verfahren nach einem der vorangehenden Ansprüche, **dadurch gekennzeichnet, daß** der öllösliche Emulgator ausgewählt wird aus Sorbitan- oder Sucroseestern oder Mischungen derselben.

10. Verfahren nach Anspruch 9, **dadurch gekennzeichnet, daß** der öllösliche Emulgator in einer Menge von 100 bis 10.000 Gewichts-ppm, basierend auf dem Gewicht des Vinylchloridmonomers, verwendet wird.

11. Verfahren nach einem der vorangehenden Ansprüche, **dadurch gekennzeichnet, daß** der Initiator ausgewählt wird aus der Gruppe umfassend Di-2-ethylhexylperoxydicarbonat, 1,1,3,3-Tetramethylbutylperoxyneodecanoat, tert-Butylperoxyneoheptanoat, tert-Butylperoxyneodecanoat, wobei Di-2-ethylhexylperoxydicarbonat bevorzugt wird.

12. Verfahren nach Anspruch 11, **dadurch gekennzeichnet, daß** der Inititator in einer Menge von 100 - 1.000 Gewichts-ppm, basierend auf dem Gewicht des Vinylchloridmonomers, verwendet wird.

13. Verfahren nach einem der vorangehenden Ansprüche, **dadurch gekennzeichnet, daß** der wasserlösliche Emulgator ausgewählt wird aus der Gruppe umfassend Alkyl- oder Hydroxyalkylcelluloseether, Methylcellulose und Methylhydroxypropylcellulose, wobei Methylhydroxypropylcellulose bevorzugt wird.

14. Verfahren nach Anspruch 13, **dadurch gekennzeichnet, daß** der wasserlösliche Emulgator in einer Menge von 500 - 5.000 Gewichts-ppm, basierend auf dem Gewicht des Vinylchloridmonomers, verwendet wird.

15. Verfahren nach einem der vorangehenden Ansprüche, **dadurch gekennzeichnet, daß** das Gewichtsverhältnis von Wasser zu Monomer in dem zweiten Reaktor in dem Bereich von 1,0 - 1,5 zu 1 ist.

16. Verfahren nach einem der vorangehenden Ansprüche, **dadurch gekennzeichnet, daß** der zweite Reaktor zusätzlich mit Vinylchloridmonomer befüllt wird.

## Revendications

1. Procédé pour la préparation de polychlorure de vinyle comprenant les étapes consistant à :
- polymériser en masse du monomère de chlorure de vinyle en présence d'au moins un agent émulsionnant soluble dans l'huile et d'au moins un initiateur dans un premier réacteur ayant un mélangeur à agitateur à cisaillement élevé dans une plage de 100 à 1 500 tr/min, jusqu'à ce qu'une conversion désirée dans la plage de 1 à 15 pour cent soit atteinte ;
- transférer le contenu du premier réacteur dans au moins un second réacteur qui a été chargé avec de l'eau déminéralisée et au moins un agent émulsionnant soluble dans l'eau ; et
- polymériser le mélange dans le second réacteur ayant un mélangeur à agitateur avec un cisaillement inférieur à celui dans le premier réacteur jusqu'à ce qu'une conversion désirée dans la plage de 60 à 100 pour cent soit atteinte.

2. Procédé selon la revendication 1, dans lequel la vitesse d'agitation dans le premier réacteur est dans la plage de 750 à 1 200 tr/min, et la vitesse d'agitation dans le second réacteur est d'environ 75 à 500 tr/min, de préférence de 95 à 350 tr/min.

3. Procédé selon la revendication 1 ou 2, dans lequel le second réacteur est 2 à 2,5 fois plus gros que le premier réacteur.

4. Procédé selon l'une quelconque des revendications précédentes, dans lequel la température dans le premier réacteur est dans la plage de 55 à 75°C, de préférence de 65°C, et la température dans le second réacteur est dans la plage de 45 à 75°C, de préférence de 50 à 70°C.

5. Procédé selon l'une quelconque des revendications précédentes, dans lequel la conversion dans le premier réacteur est dans la plage de 7 à 10 pour cent, et la conversion dans le second réacteur est dans la plage de 75 à 85 pour cent.

6. Procédé selon l'une quelconque des revendications précédentes, dans lequel le volume du premier réacteur est dans la plage de 1 litre à 75 m³, de préférence dans la plage de 25 à 75 m³, et le volume du second réacteur est dans la plage de 8 litres à 150 m³, de préférence dans la plage de 50 à 150 m³.

7. Procédé selon l'une quelconque des revendications précédentes, dans lequel un premier réacteur est utilisé avec jusqu'à cinq seconds réacteurs.

8. Procédé selon l'une quelconque des revendications précédentes, dans lequel le premier réacteur est positionné au-dessus du second réacteur et est connecté par un tuyau continu ou une ligne de purge vers le second réacteur.

9. Procédé selon l'une quelconque des revendications précédentes, dans lequel l'agent émulsionnant soluble dans l'eau est choisi parmi les esters de sorbitan ou de sucrose, ou parmi leurs mélanges.

10. Procédé selon la revendication 9, dans lequel l'agent émulsionnant soluble dans l'huile est utilisé en une quantité de 100 à 10 000 parties par million en poids, basée sur la masse de monomère de chlorure de vinyle.

11. Procédé selon l'une quelconque des revendications précédentes, dans lequel l'initiateur est choisi dans le groupe comprenant le peroxydicarbonate de di-2-éthylhexyle, le peroxynéodécanoate de 1,1,3,3-tétraméthylbutyle, le peroxynéoheptanoate de tert-butyle, le peroxynéodécanoate de tert-butyle dans lesquels le peroxydicarbonate de di-2-éthylhexyle est préféré.

12. Procédé selon la revendication 11, dans lequel l'initiateur est utilisé en une quantité de 100 à 1 000 parties par million en poids, basée sur la masse de monomère de chlorure de vinyle.

13. Procédé selon l'une quelconque des revendications précédentes, dans lequel l'agent émulsionnant soluble dans l'eau est choisi dans le groupe constitué des éthers alkyliques ou hydroxyalkyliques de cellulose, de la méthylcellulose et de la méthylhydroxypropylcellulose, la méthylhydroxypropylcellulose étant préférée.

14. Procédé selon la revendication 13, dans lequel l'agent émulsionnant soluble dans l'eau est utilisé en une quantité de 500 à 5 000 parties par million en poids, basé sur la masse du monomère de chlorure de vinyle.

15. Procédé selon l'une quelconque des revendications précédentes, dans lequel le rapport pondéral eau/monomère dans le second réacteur est dans la plage de 1,0 à 1,5 pour 1.

16. Procédé selon l'une quelconque des revendications précédentes, dans lequel le second réacteur est en outre chargé avec du monomère de chlorure de vinyle.
